# EUROPÄISCHE PATENTSCHRIFT

(11) **EP 2 207 704 B1**
(45) Veröffentlichungstag und Bekanntmachung des Hinweises auf die Patenterteilung: **07.09.2011**
(21) Anmeldenummer: 08804100.9
(22) Anmeldetag: 12.09.2008
(51) Int. Cl.: B60T 7/12, B60T 13/74, B60T 8/32

(54) **VERFAHREN ZUR ANSTEUERUNG EINES ELEKTROMECHANISCHEN PARKBREMSENSYSTEMS EINES FAHRZEUGS, UND -SYSTEM**
METHOD FOR CONTROLLING AN ELECTROMECHANICAL PARKING BRAKE SYSTEM OF A VEHICLE, AND CORRESPONDING SYSTEM
PROCÉDÉ DE COMMANDE D'UN SYSTÈME DE FREIN DE PARKING ÉLECTROMÉCANIQUE D'UN VÉHICULE ET SYSTÈME DE FREIN DE PARKING ÉLECTROMÉCANIQUE

(30) Priorität: 28.09.2007 DE 102007046484
(43) Veröffentlichungstag der Anmeldung: 21.07.2010
(73) Patentinhaber: Continental Automotive GmbH, 30165 Hannover (DE)
(72) Erfinder: BENTNER, Johannes, 93080 Pentling (DE); KALBECK, Alexander, 93133 Burglengenfeld (DE)
(86) Internationale Anmeldenummer: PCT/EP2008/062135
(87) Internationale Veröffentlichungsnummer: WO 2009/043702

(56) Entgegenhaltungen:
- WO-A-00/73114
- DE-A1- 10 351 589

## Beschreibung

Die Erfindung betrifft ein Verfahren zur Ansteuerung eines elektromechanischen Parkbremsensystems eines Fahrzeugs gemäß dem Oberbegriff des Patentanspruches 1.

Aus dem Stand der Technik sind unterschiedliche elektromechanische Parkbremsensysteme bestehend aus zumindest einer Bremsemechanikeinheit und zumindest einem Steuergerät bekannt, bei denen jeweils über das zumindest eine Steuergerät die Betätigung, d.h. das Anziehen und Lösen der Bremsenmechanikeinheit zum Bremsen des Fahrzeuges gesteuert wird, vorzugsweise durch Betätigung der Bremsemechanikeinheit über ein elektromechanisches Stellglied. Das elektromechanische Parkbremsensystem wird vorzugsweise über ein im Fahrzeuginneren vorgesehenes einfaches Bedienelement, beispielsweise einen Taster, Wippschalter oder dergleichen angesteuert. Beispielweise wird and DE 10351589 A1 und die WO 00/73114A verwiesen.

Ferner sind derartige elektromechanische Parkbremsensysteme zum statischen und in Einzelfällen auch zum dynamischen Bremsen eines Fahrzeuges ausgebildet. Insbesondere im Falle des üblichen statischen Bremsens ist es aus sicherheitstechnischen Gründen erforderlich, dass das Fahrzeug sich nahezu im Stillstand befindet bzw. einen vorgegebenen Geschwindigkeitsschwellwert unterschreitet, d.h. die statische Bremsfunktion wird lediglich bei Unterschreiten des vorgegebenen Geschwindigkeitsschwellwertes durch das elektromechanische Parkbremssystem bereitgestellt. Überschreitet die Fahrzeuggeschwindigkeit beim Betätigen des Bedienelementes den vorgegebenen Geschwindigkeitsschwellwert, dann kann ggf. ein dynamisches Bremsen des Fahrzeuges mittels des elektromechanischen Parkbremssystems erfolgen.

Zum statischen Bremsen wird durch eine beispielsweise einmalige Betätigung des Bedienelementes ein statisches Anziehen des elektromechanischen Parkbremssystems bzw. der Bremsenmechanikeinheit mit einer hoher Anzugsgeschwindigkeit bewirkt. Insbesondere bei einer als Trommelbremseneinheit ausgebildeten Bremsenmechanikeinheit führt ein derartig schnelles Anziehen aufgrund des vorhandenen Selbstverstärkungseffektes der Trommelbremseneinheit bereits bei relativ niedrigen Fahrzeuggeschwindigkeiten zu einer ruckartigen Verzögerung des Fahrzeugs. Neben dem unkomfortablen Fahrgefühl können aufgrund des rapiden Abbremsens des Fahrzeugs sicherheitskritische Fahrsituationen entstehen. Darüber hinaus unterliegt die Bremsenmechanikeinheit einer höheren Abnutzung, wodurch die Lebensdauer dieser reduziert wird.

Aus dem Stand der Technik bekannte elektromechanische Parkbremssysteme weisen hierzu einen fest vorgegebenen Geschwindigkeitsschwellwert von beispielsweise 3 km/h auf, bei Überschreiten dessen durch das elektromechanische Parkbremsensystem keine statische Bremsfunktion bereitgestellt wird. Alternativ kann bei Überschreiten der genannten Geschwindigkeitsschwelle das elektromechanische Parkbremssystem zum dynamischen Bremsen ausgebildet sein. Hier folgt beispielsweise die dynamische Bremsfunktion unmittelbar der Betätigung des Bedienteils, d.h. durch Betätigen des Bedienteils wird eine vorzugsweise proportionale dynamische Bremskraft erzeugt, wohingegen beim Loslassen des Bedienteils die Bremse unmittelbar gelöst wird.

Ausgehend hiervon liegt der Erfindung die Aufgabe zugrunde, die Ansteuerung eines derartigen elektromechanischen Parkbremsensystems, insbesondere zum statischen Bremsen zu verbessern. Die Aufgabe wird ausgehend von den Merkmalen des Oberbegriffes des Patentanspruches 1 durch dessen kennzeichnende Merkmale gelöst.

Der wesentliche Aspekt der Erfindung ist darin zu sehen, dass die bei Betätigung des zumindest einen Betätigungselement vorliegende Fahrzeuggeschwindigkeit ermittelt wird und die Anziehgeschwindigkeit der Bremsenmechanikeinheit abhängig von der ermittelten Fahrzeuggeschwindigkeit gewählt wird. Hierdurch kann besonders vorteilhaft die statische Bremsfunktion bereits bei im Vergleich zum Stand der Technik höheren Fahrzeuggeschwindigkeiten bereitgestellt werden, indem die vorgesehene Anziehgeschwindigkeit um bis zu 60 % reduziert wird. Die Anziehgeschwindigkeit wird somit in Abhängigkeit von der beim Betätigen der Parkbremse vorliegenden Fahrzeuggeschwindigkeit gewählt, welche mittels entsprechender Kennlinien durch die Steuer- und Auswerteroutine aktuell ermittelt bzw. berechnet wird. Ruckartige Verzögerungen des Fahrzeuges können hierdurch effektiv vermieden werden.

Vorteilhaft wird hierzu die ermittelte Fahrzeuggeschwindigkeit mit zumindest einem Geschwindigkeitsschwellwert verglichen und bei einem Unterschreiten des Geschwindigkeitsschwellwertes die Bremsenmechanikeinheit mit einer reduzierten Anziehgeschwindigkeit betätigt.

In einer vorteilhaften Variante der Erfindung wird der Geschwindigkeitsschwellwert abhängig von der Betätigungsdauer des Bedienelementes ausgewählt.

Weiterhin vorteilhaft wird der Geschwindigkeitsschwellwert aus einem durch eine minimalen und maximalen Geschwindigkeitsschwellwert begrenzten Geschwindigkeitsschwellwertbereich zwischen 3 km/h und 50 km/h, insbesondere 3 km/h und 30 km/h dynamisch ausgewählt.

Vorteilhafte Weiterbildungen des erfindungsgemäßen Verfahrens, insbesondere ein zugehöriges elektromechanisches Parkbremsensystem sind den weiteren Patentansprüchen zu entnehmen.

Die Erfindung wird nachfolgend an einem Ausführungsbeispiel anhand von Figuren näher erläutert. Es zeigen:
- Fig. 1: beispielhaft ein Blockschaltbild eines elekt- romechanisches Parkbremsensystem,
- Fig. 2: beispielhaft in einem Diagramm mehrere Kennli- nien zur geschwindigkeitsabhängigen Ermittlung der Anziehgeschwindigkeit der Bremsenmechanik- einheit,
- Fig. 3: beispielhaft in einem weiteren Diagramm zwei alternative Kennlinien zur geschwindigkeitsab- hängigen Ermittlung der Anziehgeschwindigkeit der Bremsenmechanikeinheit,
- Fig. 4: beispielhaft in einem Diagramm den Geschwin- digkeitsverlauf mit einem zugeordneten Akti- vierungsbereich und
- Fig. 5: beispielhaft in einem Diagramm eine Kennlinie zur dynamischen Ermittlung eines Geschwindig- keitsschwellwertes.

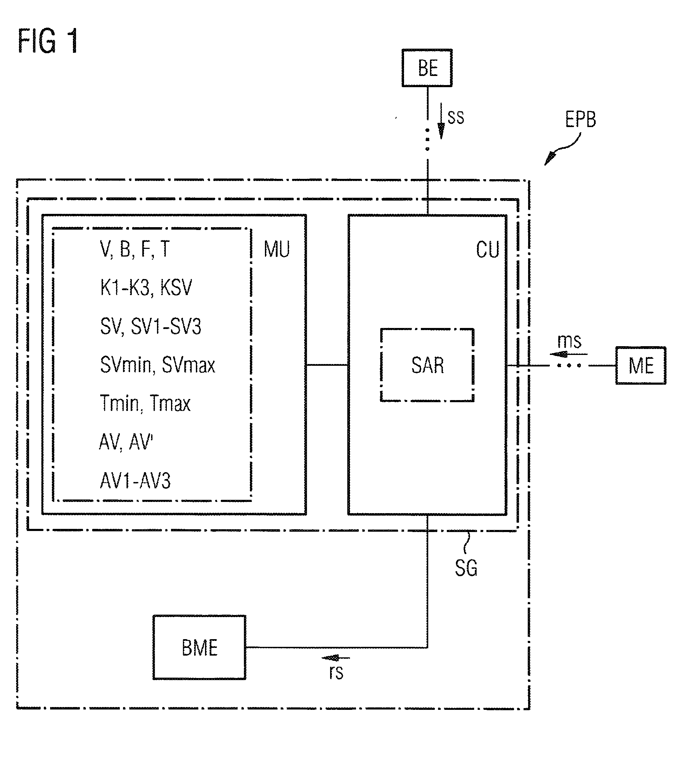

In Fig. 1 ist beispielhaft in einem schematischen Blockschaltbild ein elektromechanisches Parkbremsensystem EPB dargestellt, welches über ein Steuergerät SG und eine mit diesem verbundene Bremsenmechanikeinheit BME verfügt.

Das Steuergerät SG umfasst eine Steuereinheit CU und eine Speichereinheit MU, wobei in der Steuereinheit CU eine Steuer- und Auswerteroutine SAR zur Ansteuerung des elektromechanischen Parkbremsensystems EPB zum statischen oder dynamischen Bremsen eines Fahrzeugs ausgeführt wird.

An das Steuergerät SG sind über mehrere Verbindungsschnittstellen, beispielsweise drahtgebundene oder drahtlose Schnittstellen oder ein Bussystem zumindest ein Bedienelement BE und eine Messeinheit ME angeschlossen.

Durch eine manuelle Betätigung des Bedienelementes BE wird ein Schaltsignal ss erzeugt und an die Steuereinheit CU übertragen. Das Schaltsignal ss wird durch die Steuer- und Auswerteroutine SAR ausgewertet und abhängig von der Charakteristik des Schaltsignals ss der Steuerwunsch des Fahrers ermittelt, der zu Ansteuerung der Bremsenmechanikeinheit BME in zumindest ein entsprechendes Regelsignal rs umgesetzt wird, welches an die Bremsenmechanikeinheit BME übertragen wird.

Gemäß dem Regelsignal rs erfolgt dann eine Betätigung der Bremsenmechanikeinheit BME, insbesondere ein Anziehen dieser mit einer Anziehgeschwindigkeit AV. Die Anziehgeschwindigkeit AV gibt hierbei das Ansprechverhalten des elektromechanischen Parkbremsensystems EPB auf eine Betätigung des Bedienelementes BE durch den Fahrer wieder. Beispielsweise wird über die Anziehgeschwindigkeit AV der pro Zeiteinheit t zurückgelegte Stellweg x zur Betätigung der Bremsenmechanikeinheit BME und somit die Zunahme der durch das elektromechanische Parkbremsensystem EPB bereitgestellten Bremskraft F pro Zeiteinheit t festgelegt.

Die Messeinheit ME dient zur Ermittlung zumindest eines Messsignals ms, welches insbesondere Informationen bezüglich der Fahrzeuggeschwindigkeit V oder der Beschleunigung B des Fahrzeuges aufweist. Das Messsignal ms wird durch die Steuer- und Auswerteroutine SAR ausgewertet und hierdurch zumindest die aktuelle Fahrzeuggeschwindigkeit V oder Beschleunigung B ermittelt.

Abhängig von der bei der Betätigung des Bedienelementes BE vorliegenden Fahrzeuggeschwindigkeit V des Fahrzeuges wird die Anziehgeschwindigkeit AV der Bremsenmechanikeinheit BME durch die Steuer- und Auswerteroutine SAR ausgewählt bzw. berechnet.

Hierzu wird die ermittelte Fahrzeuggeschwindigkeit V mit zumindest einem ersten Geschwindigkeitsschwellwert SV1 verglichen und bei einem Unterschreiten des ersten Geschwindigkeitsschwellwertes SV1 die Bremsenmechanikeinheit BME mit einer zugeordneten ersten Anziehgeschwindigkeit AV1 betätigt, welche deutlich unterhalb der aus dem Stand der Technik bekannten Anziehgeschwindigkeiten im statischen Fall liegt.

Der erste Geschwindigkeitsschwellwert SV1 liegt hierbei über den aus dem Stand der Technik bekannten 3 km/h, beispielsweise zwischen 3 km/h und 50 km/h, insbesondere zwischen 3 km/h und 30 km/h. Bei Unterschreiten des ersten Geschwindigkeitsschwellwert SV1 wird bereits durch das elektromechanische Parkbremsensystem EPB eine statische Bremsfunktion bereitgestellt, allerdings mit einer erfindungsgemäß reduzierten ersten Anziehgeschwindigkeit AV. Beispielweise kann abhängig vom Betrag des Unterschreitens des ersten Geschwindigkeitsschwellwertes SV1 durch die Fahrzeuggeschwindigkeit V eine unterschiedliche Anziehgeschwindigkeit AV1 - AV3 ausgewählt werden. Alternativ können mehrere Geschwindigkeitsschwellwerte SV1 - SV3 vorgesehen sein, denen jeweils eine unterschiedliche Anziehgeschwindigkeit AV1 - AV3 zugeordnet ist.

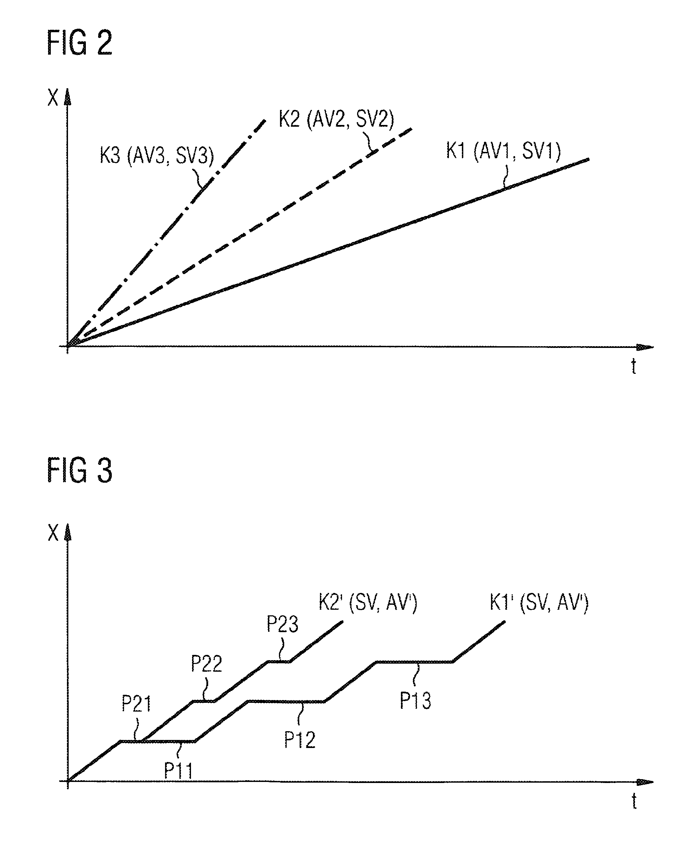

In den Figuren 2 und 3 sind beispielhaft in einem Diagramm unterschiedliche Kennlinien K1 K3 dargestellt, wobei jeweils entlang der horizontalen Achse (Abszisse) des Diagramms die Zeit t und entlang der vertikalen Achse (Ordinate) des Diagramms der Stellweg x zur Betätigung der Bremsenmechanikeinheit BME aufgetragen sind.

Die Steigung der in den Diagrammen dargestellten Kennlinien K1 - K3 gibt hierbei den Betrag der Anziehgeschwindigkeit AV1 - AV3 wieder, der beispielhaft konstant oder abschnittsweise konstant gewählt sein kann.

Jeder der Kennlinien K1 K3 ist hierbei ein Geschwindigkeitsschwellwert SV1 - SV3 zugeordnet, bei dessen Unterschreiten die durch die jeweilige Kennlinie K1 K3 vorgegebene Anziehgeschwindigkeit AV1 - AV3 zur Betätigung der Bremsenmechanikeinheit BME über die Steuer- und Auswerteroutine SAR ausgewählt wird.

So sind beispielsweise bei dem in Figur 2 dargestellten Ausführungsbeispiel eine erste bis dritte Kennlinie K1 bis K3 und somit eine erste bis dritte Anziehgeschwindigkeit AV1 - AV3 zur Betätigung der Bremsenmechanikeinheit BME vorgesehen.

Der ersten Kennlinie K1 ist ein erster Geschwindigkeitsschwellwert SV1, der zweiten Kennlinie K2 ein zweiter Geschwindigkeitsschwellwert SV2 und der dritten Kennlinie K3 ein dritter Geschwindigkeitsschwellwert SV3, wobei der Betrag des ersten Geschwindigkeitsschwellwertes SV1 größer als der Betrag des zweiten Geschwindigkeitsschwellwertes SV2 und dieser wiederum größer als der Betrag des dritten Geschwindigkeitsschwellwertes SV3 ist.

In Fig. 3 ist beispielsweise eine erste und zweite Kennlinie K1, K2 dargestellt, die jeweils dieselbe, abschnittsweise konstante Anziehgeschwindigkeit AV umfassen, d.h. die Kennlinien K1, K2 weisen jeweils mehrere Anziehpausen P11, P12, P13 bzw. P21, P22, P23 vorzugsweise jeweils gleicher zeitlicher Länge auf, in denen die Bremsenmechanikeinheit BME nicht betätigt wird.

Beispielsweise wird bei Unterschreiten des ersten Geschwindigkeitsschwellwertes SV1 durch die Fahrzeuggeschwindigkeit die erste Kennlinie K1 zur Ansteuerung der Bremsenmechanikeinheit BME vorgesehen, bei der die Bremsenmechanikeinheit BME zwar mit derselben Anziehgeschwindigkeit AV als im Falle der zweiten Kennlinie K2 betätigt wird, jedoch die Anziehpausen P11 P12, P13 im Vergleich zu den Anziehpausen P21, P22, P23 der zweiten Kennlinie K2 zeitlich deutlich länger gewählt sind. Hierdurch ergibt sich bei Unterschreiten des ersten Geschwindigkeitsschwellwertes SV1 ein langsameres Ansprechverhalten des elektromechanischen Parkbremsensystems EPB als nach einer weiteren Reduzierung der Fahrzeuggeschwindigkeit V unter den zweiten Geschwindigkeitsschwellwert SV2, d.h. die gesamte Anziehdauer der betrachteten Bremsvorgänge ist unterschiedlich. Hierbei ist wiederum der Betrag des ersten Geschwindigkeitsschwellwertes SV1 größer als der Betrag des zweiten Geschwindigkeitsschwellwertes SV2 gewählt.

Aufgrund der zeitlich deutlich längeren Anziehdauer des elektromechanischen Parkbremsensystems EPB kann es dazu kommen, dass während des Anziehvorgangs des elektromechanischen Parkbremsensystem EPB der Fahrer seine Entscheidung ändert und das Fahrzeug erneut beschleunigt. Um in einem derartigen Fall ein ungewünschtes Abbremsen des Fahrzeuges mittels des elektromechanischen Parkbremsensystems EPB zu verhindern, wird ein Aktivierungsbereich AB vorgegeben, der durch den ersten Geschwindigkeitsschwellwert SV1 nach oben begrenzt wird und der den zweiten Geschwindigkeitsschwellwert SV2 umfasst.

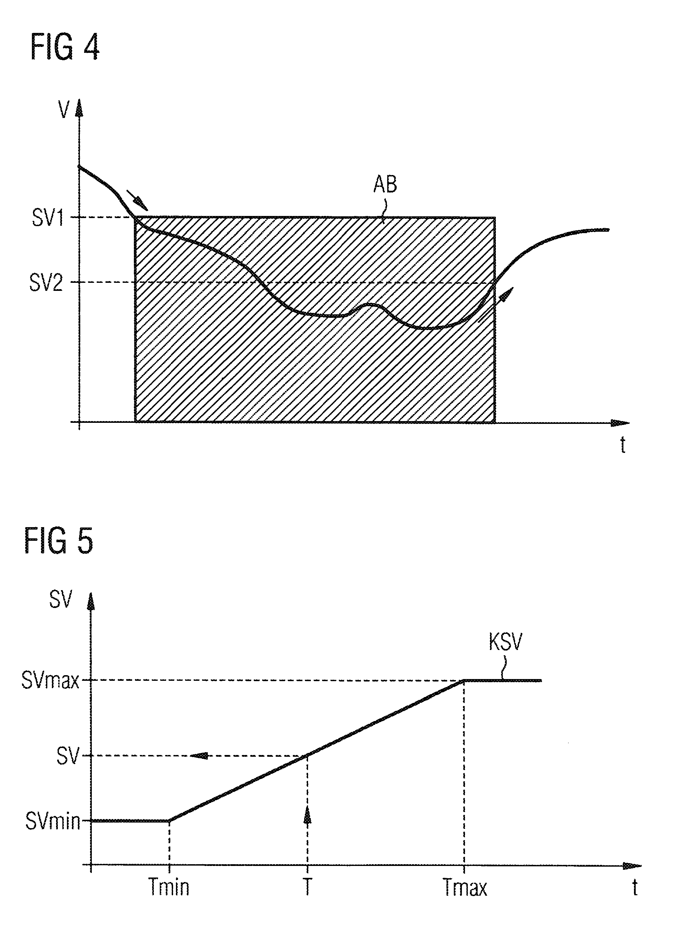

In Figur 4 ist beispielhaft in einem Diagramm der Verlauf der Geschwindigkeit V eines Fahrzeuges über der Zeit t aufgetragen. Der durch den ersten Geschwindigkeitsschwellwert SV1 nach oben begrenzte Aktivierungsbereich AB ist hierbei grafisch markiert. Bei Unterschreiten des ersten Geschwindigkeitsschwellwertes SV1 durch die aktuelle Fahrzeuggeschwindigkeit V wird der Aktivierungsbereich AB betreten, d.h. durch das elektromechanische Parkbremsensystem EPB wird eine statische Bremsfunktion bereitgestellt. Betätigt nun der Fahrer über das Bedienelement BE das elektromechanische Parkbremsensystem EPB, wird die Bremsenmechanikeinheit BME mit der dem ersten Geschwindigkeitsschwellwert SV1 zugeordneten ersten Anziehgeschwindigkeit AV1 angezogen. Die Fahrzeuggeschwindigkeit V wird weiter reduziert und unterschreiten auch den zweiten Geschwindigkeitsschwellwert SV2.

Sobald nun der Fahrer durch aktives Beschleunigen den zweiten Geschwindigkeitsschwellwert SV2 überschreitet, wird der Aktivierungsbereich AB verlassen, d.h. die Betätigung des elektromechanischen Parkbremsensystems EPB wird abgebrochen. Zusätzlich oder alternativ kann die Betätigung des Gaspedals oder das aktuell vorliegende Motormoment über die Messeinheit ME erfasst und über die Steuer- und Auswerteroutine SAR ausgewertet werden sowie hierdurch eine erneute Beschleunigung des Fahrzeuges detektiert werden. Somit wird der Lösevorgang beispielsweise über das Motormoment des Antriebssystems gesteuert, und zwar wird die Bremsenmechanikeinheit BME erst dann gelöst wird, wenn eine vorgegebene Motormomentschwelle und/oder Gaspedalschwelle überschritten wird.

Auch kann der zweite Geschwindigkeitsschwellwert SV2 abhängig von der zeitlichen Dauer des Beschleunigungsvorganges oder abhängig von der Dauer des Unterschreitens des ersten Geschwindigkeitsschwellwertes SV1 seit dem Start des Anziehvorgangs gewählt werden.

Ferner kann ein Geschwindigkeitsschwellwertbereich zwischen 5km/h und 15 km/h vorgegeben sein. Mittels der Auswerte- und Steuerroutine SAR wird abhängig von der Betätigungsdauer T des Bedienelementes BE aus dem Geschwindigkeitsschwellwertbereich ein zugeordneter Geschwindigkeitsschwellwert SV ausgewählt, der für die weitere Ansteuerung des elektromechanischen Parkbremsensystems EPB herangezogen wird. Vorzugsweise nimmt bei einer zeitlich zunehmenden Betätigung des Bedienelementes BE der Betrag des Geschwindigkeitsschwellwertes SV ebenfalls zu.

In Figur 5 ist beispielhaft in einem Diagramm eine Kennlinie KSV zur dynamischen Ermittlung des Geschwindigkeitsschwellwertes SV abhängig von der Betätigungsdauer T des Bedienelementes dargestellt. Die Kennlinie KSV wird durch eine minimale und maximalen Geschwindigkeitsschwellwertes SVmin, SVmax begrenzt, für deren Auswahl eine minimal Betätigungsdauer Tmin bzw. eine maximale Betätigungsdauer Tmax erforderlich sind. Bei einer zwischen der minimalen und maximalen Betätigungsdauer Tmin, Tmax liegenden Betätigungsdauer T wird ein durch den Verlauf der Kennlinie KSV festgelegter Geschwindigkeitsschwellwertes SV ausgewählt.

Vorteilhaft kann bei Überschreiten eines dritten Geschwindigkeitsschwellwertes SV3, dessen Betrag zwischen Fahrzeugstillstand und dem ersten und zweiten Geschwindigkeitsschwellwertes SV1, SV2 liegt, im Falle eines Blockierens der Räder ein vorgegebenes Anzieh-/Lösemuster vorgesehen sein, über welches das elektromechanische Parkbremsensystems EPB abwechselnd gelöst und wieder angezogen wird, und zwar ohne dass eine weitere Betätigung des Bedienelementes BE erforderlich ist.

Die Erfindung wurde voranstehend an einem Ausführungsbeispiel beschrieben. Es versteht sich, dass zahlreiche Änderungen und Modifikationen möglich sind, ohne dass der der Erfindung zugrunde liegende Gedanke verlassen wird.

### Bezugszeichenliste

- AB: Aktivierungsbereich
- AV: Anziehgeschwindigkeit
- AV1: erste Anziehgeschwindigkeit
- AV2: zweite Anziehgeschwindigkeit
- AV3: dritte Anziehgeschwindigkeit
- B: Beschleunigung
- BE: Bedienelement
- BME: Bremsenmechanikeinheit
- CU: Steuereinheit
- EPB: elektromechanisches Parkbremsensystem
- KS1 - KS3, KSV: Kennlinien
- ME: Messeinheit
- ms: Messsignal
- MU: Speichereinheit
- P11, P12, P13: Anziehpausen
- P21, P22, P23: Anziehpausen
- rs: Regelsignal
- SAR: Steuer- und Auswerteroutine
- SG: Steuergerät
- ss: Schaltsignal
- SV1: dritter Geschwindigkeitsschwellwert
- SV1: erster Geschwindigkeitsschwellwert
- SV2: zweiter Geschwindigkeitsschwellwert
- SVmax: maximaler Geschwindigkeitsschwellwert
- SVmin: minimaler Geschwindigkeitsschwellwert
- t: Zeit
- tmax: maximale Betätigungsdauer
- tmin: minimale Betätigungsdauer
- V: Geschwindigkeit
- x: Stellweg

## Patentansprüche

1. Verfahren zur Ansteuerung eines elektromechanischen Parkbremsensystems (EPB) eines Fahrzeugs, bei dem das elektromechanische Parkbremsensystem (EPB) zumindest ein Betätigungselement (BE), zumindest eine Bremsenmechanikeinheit (BME), und zumindest ein Steuergerät (SG) aufweist, wobei zum statischen Bremsen des Fahrzeuges das Betätigungselement (BE) betätigt wird und abhängig davon gesteuert über eine im Steuergerät (SG) ausgeführte Steuer- und Auswerteroutine (SAR) die zumindest eine Bremsenmechanikeinheit (BME) mit einer vorgegebenen Anziehgeschwindigkeit (AV) angezogen wird,
**dadurch gekennzeichnet,**
**dass** die bei Betätigung des zumindest einen Betätigungselement (BE) vorliegende Fahrzeuggeschwindigkeit (V) ermittelt wird und
**dass** die Anziehgeschwindigkeit (AV) der Bremsenmechanikeinheit (BME) abhängig von der ermittelten Fahrzeuggeschwindigkeit gewählt wird.

2. Verfahren nach Anspruch 1,
**dadurch gekennzeichnet,**
**dass** die ermittelte Fahrzeuggeschwindigkeit (V) mit zumindest einem Geschwindigkeitsschwellwert (SV1) verglichen wird und bei einem Unterschreiten des Geschwindigkeitsschwellwertes (SV1) die Bremsenmechanikeinheit (BME) mit einer reduzierten Anziehgeschwindigkeit (AV) betätigt wird.

3. Verfahren nach Anspruch 1 oder 2,
**dadurch gekennzeichnet,**
**dass** das der Geschwindigkeitsschwellwert (SV1) abhängig von der Betätigungsdauer (T) des Bedienelementes (BE) ausgewählt wird.

4. Verfahren nach Anspruch 3,
**dadurch gekennzeichnet,**
**dass** der Geschwindigkeitsschwellwert (SV1) aus einem durch eine minimalen und maximalen Geschwindigkeitsschwellwert (SVmin, SVmax) begrenzten Geschwindigkeitsschwellwertbereich zwischen 5km/h und 15 km/h dynamisch ausgewählt wird.

5. Verfahren nach einem der Ansprüche 1 bis 4,
**dadurch gekennzeichnet,**
**dass** die Anziehgeschwindigkeit (AV, AV1 -AV3) anhand von dem jeweils unterschrittenen Geschwindigkeitsschwellwert (SV1 - SV3) zugeordneten Kennlinien (K1 - K3) ausgewählt wird.

6. Verfahren nach Anspruch 5,
**dadurch gekennzeichnet,**
**dass** der Betrag der Anziehgeschwindigkeit (AV, AV1 - AV3, AV') zumindest abschnittsweise konstant gewählt wird.

7. Verfahren nach einem der Ansprüche 1 bis 6,
**dadurch gekennzeichnet,**
**dass** die Anziehgeschwindigkeit (AV') durch Vorsehen mehrerer Anziehpausen (P11, P12, P13 bzw. P21, P22, P23) vorzugsweise jeweils gleicher zeitlicher Länge reduziert wird.

8. Verfahren nach einem der Ansprüche 1 bis 7,
**dadurch gekennzeichnet,**
**dass** bei Unterschreiten des ersten Geschwindigkeitsschwellwertes (SV1) durch die Fahrzeuggeschwindigkeit (V) eine statische Bremsfunktion bereitgestellt wird und bei Überschreiten eines zweiten Geschwindigkeitsschwellwertes (SV2) die Bremsenmechanikeinheit (BME) gelöst wird, wobei der Betrag des ersten Geschwindigkeitsschwellwertes (SV1) den Betrag des zweiten Geschwindigkeitsschwellwertes (SV2) überschreitet.

9. Verfahren nach Anspruch 8,
**dadurch gekennzeichnet,**
**dass** bei Vorliegen einer erneuten Beschleunigung (B) des Fahrzeuges und/oder eines Beschleunigungswunsches des Fahrers die Bremsenmechanikeinheit (BME) gelöst wird.

10. Verfahren nach einem der Ansprüche 1 bis 9,
**dadurch gekennzeichnet,**
**dass** bei Überschreiten eines dritten Geschwindigkeitsschwellwertes (SV3), dessen Betrag zwischen Fahrzeugstillstand und dem ersten und zweiten Geschwindigkeitsschwellwertes (SV1, SV2) liegt, im Falle eines Blockierens der Räder die Bremsenmechanikeinheit (BME) nach einem vorgegebenen Anzieh-/Lösemuster betätigt wird.

11. Verfahren nach der Ansprüche 8 bis 10,
**dadurch gekennzeichnet,**
**dass** der zweite Geschwindigkeitsschwellwert (SV2) abhängig von der zeitlichen Dauer des Beschleunigungsvorganges oder abhängig von der Dauer des Unterschreitens des ersten Geschwindigkeitsschwellwertes (SV1) seit dem Start des Anziehvorgangs gewählt wird.

12. Elektromechanisches Parkbremsensystem (EPB) bestehend aus zumindest einem Betätigungselement (BE), zumindest einer Bremsenmechanikeinheit (BME) und zumindest einem Steuergerät (SG), wobei zum statischen Bremsen eines Fahrzeuges das Betätigungselement (BE) betätigt wird und abhängig davon gesteuert über eine im Steuergerät (SG) ausgeführte Steuer- und Auswerteroutine (SAR) die zumindest eine Bremsenmechanikeinheit (BME) mit einer vorgegebenen Anziehgeschwindigkeit (AV) angezogen wird,
**dadurch gekennzeichnet,**
**dass** die Steuer- und Auswerteroutine (SAR) zur Ermittlung der bei Betätigung des zumindest einen Betätigungselementes (BE) vorliegenden Fahrzeuggeschwindigkeit (V) und zur Bestimmung einer Anziehgeschwindigkeit (AV) zum Anziehen der Bremsenmechanikeinheit (BME) abhängig von der ermittelten Fahrzeuggeschwindigkeit (V) ausgebildet ist.

## Claims

1. Method for controlling an electromechanical parking brake system (EPB) of a vehicle, in which the electromechanical parking brake system (EPB) has at least one activation element (BE), at least one brake mechanism unit (BME), and at least one control unit (SG), wherein in order to statically brake the vehicle the activation element (BE) is activated, and as a function thereof the at least one brake mechanism unit (BME) is applied with a predefined application speed (AV) under the control of a control and evaluation routine (SAR) which is carried out in the control unit (SG),
**characterized**
**in that** the vehicle speed (V) which is present when the at least one activation element (BE) is activated is determined, and
**in that** the application speed (AV) of the brake mechanism unit (BME) is selected as a function of the determined vehicle speed.

2. Method according to Claim 1,
**characterized**
**in that** the determined vehicle speed (V) is compared with at least one speed threshold value (SV1), and when the speed threshold value (SV1) is undershot the brake mechanism unit (BME) is activated with a reduced application speed (AV).

3. Method according to Claim 1 or 2,
**characterized**
**in that** the speed threshold value (SV1) is selected as a function of the activation period (T) of the operator control element (BE).

4. Method according to Claim 3,
**characterized**
**in that** the speed threshold value (SV1) is dynamically selected from a speed threshold value range between 5 km/h and 15 km/h, which is bounded by a minimum and a maximum speed threshold value.

5. Method according to one of Claims 1 to 4,
**characterized**
**in that** the application speed (AV, AV1 - AV3) is selected on the basis of characteristic curves (K1 - K3) which are assigned to their respectively undershot speed threshold value (SV1 - SV3).

6. Method according to Claim 5,
**characterized**
**in that** the absolute value of the application speed (AV, AV1 - AV3, AV') is selected to be constant at least in certain sections.

7. Method according to one of Claims 1 to 6,
**characterized**
**in that** the application speed (AV') is reduced by providing a plurality of application pauses (P11, P12, P13 and P21, P22, P23 respectively) of preferably respectively identical chronological length.

8. Method according to one of Claims 1 to 7,
**characterized**
**in that**, when the first speed threshold value (SV1) is undershot by the vehicle speed (V), a static brake function is made available, and when a second speed threshold value (SV2) is exceeded, the brake mechanism unit (BME) is released, wherein the absolute value of the first speed threshold value (SV1) absolute value of the second speed threshold value (SV2).

9. Method according to Claim 8,
**characterized**
**in that** the brake mechanism unit (BME) is released when renewed acceleration (BE) of the vehicle occurs and/or when there is an acceleration request by the driver.

10. Method according to one of Claims 1 to 9,
**characterized**
**in that**, when a third speed threshold value (SV3), whose absolute value is between the stationary state of the vehicle and the first and second speed threshold values (SV1, SV2), is exceeded, the brake mechanism unit (BME) is activated according to a predefined application/release pattern if the wheels lock.

11. Method according to one of Claims 8 to 10,
**characterized**
**in that** the second speed threshold value (SV2) is selected as a function of the chronological duration of the acceleration process or as a function of the duration of the undershooting of the first speed threshold value (SV1) since the start of the application process.

12. Electromechanical parking brake system (EPB) composed of at least one activation element (BE), at least one brake mechanism unit (BME) and at least one control unit (SG), wherein in order to statically brake a vehicle the activation element (BE) is activated, and as a function thereof the at least one brake mechanism unit (BME) is applied with a predefined application speed (AV) under the control of a control and evaluation routine (SAR) which is carried out in the control unit (SG),
**characterized**
**in that** the control and evaluation routine (SAR) is designed to determine the vehicle speed (V) which is present when the at least one activation element (BE) is activated, and to determine the application speed (AV) for the application of the brake mechanism unit (BME) as a function of the determined vehicle speed (V).

## Revendications

1. Procédé pour piloter un système de frein de stationnement électromécanique (EPB) d'un véhicule, dans lequel le système de frein de stationnement électromécanique (EPB) présente au moins un élément d'actionnement (BE), au moins une unité de mécanisme de freinage (BME) et au moins un appareil de pilotage (SG), dans lequel pour le freinage statique du véhicule, l'élément d'actionnement (BE) est actionné et la au moins une unité de mécanisme de freinage (BME), pilotée en fonction de ce dernier par le biais d'un algorithme de pilotage et d'évaluation (SAR) effectué dans l'appareil de pilotage (SG), est serrée à une vitesse de serrage (AV) prédéfinie,
**caractérisé en ce que**
la vitesse (V) de véhicule existant lors de l'actionnement du au moins un élément d'actionnement (BE) est détectée, et
**en ce que** la vitesse de serrage (AV) de l'unité de mécanisme de freinage (BME) est choisie en fonction de la vitesse de véhicule détectée.

2. Procédé selon la revendication 1,
**caractérisé en ce que**
la vitesse de véhicule détectée (V) est comparée à au moins une valeur de seuil de vitesse (SV1) et **en ce que** l'unité de mécanisme de freinage (BME) est actionnée à une vitesse de serrage (AV) réduite lors du passage en-dessous de la valeur de seuil de vitesse (SV1).

3. Procédé selon la revendication 1 ou 2,
**caractérisé en ce que**
la valeur de seuil de vitesse (SV1) est choisie en fonction de la durée d'actionnement (T) de l'élément d'actionnement (BE).

4. Procédé selon la revendication 3,
**caractérisé en ce que**
la valeur de seuil de vitesse (SV1) est choisie, de manière dynamique, dans une plage de valeurs de seuil de vitesse limitée par une valeur de seuil de vitesse minimale et une valeur de seuil de Vitesse maximale (SVmin., SVmax.), entre 5 km/h et 15 km/h.

5. Procédé selon l'une quelconque des revendications 1 à 4,
**caractérisé en ce que**
la vitesse de serrage (AV, AV1 à AV3) est choisie à l'aide de lignes caractéristiques (K1 à K3) affectées à la valeur de seuil de vitesse (SV1 à SV3) qui respectivement n'a pas été atteinte.

6. Procédé selon la revendication 5,
**caractérisé en ce que**
la valeur de la vitesse de serrage (AV, AV1 à AV3, AV') est choisie, au moins par passages, de manière constante.

7. Procédé selon l'une quelconque des revendications 1 à 6,
**caractérisé en ce que**
la Vitesse de serrage (AV') est réduite en prévoyant plusieurs pauses de serrage (P11, P12, P13 ou P21, P22, P23), de préférence respectivement de la même durée de temps.

8. Procédé selon l'une quelconque des revendications 1 à 7,
**caractérisé en ce que**
lors du passage en-dessous de la première vitesse de seuil de vitesse (SV1) dû à la vitesse de véhicule (V), une fonction de freinage statique est mise à disposition et **en ce que** lors du dépassement de la deuxième valeur de seuil de vitesse (SV2), l'unité de mécanisme de freinage (BME) est desserrée, la valeur de la première valeur de seuil de Vitesse (SV1) dépassant la valeur de la deuxième valeur de seuil de vitesse (SV2).

9. Procédé selon la revendication 8,
**caractérisé en ce que**
en présence d'une nouvelle accélération (B) du véhicule et/ou d'un souhait d'accélération de la part du conducteur, l'unité de mécanisme de freinage (BME) est desserrée.

10. Procédé selon l'une quelconque des revendications 1 à 9,
**caractérisé en ce que**
lors du dépassement d'une troisième valeur de seuil de vitesse (SV3), dont la valeur se situe entre l'arrêt du véhicule et les première et deuxième valeurs de seuil de vitesse (SV1, SV2), dans le cas d'un blocage des roues, l'unité de mécanisme de freinage (BME) est actionnée selon un modèle de serrage/desserrage prédéfini.

11. Procédé selon l'une quelconque des revendications 8 à 10,
**caractérisé en ce que**
la deuxième valeur de seuil de vitesse (SV2) est choisie en fonction de la durée de temps du processus d'accélération ou en fonction de la durée du passage en-dessous de la première valeur de seuil de vitesse (SV1) à compter du début du processus de serrage.

12. système de frein de stationnement électromécanique (EPB), constitué d'au moins un élément d'actionnement (BE), d'au moins une unité de mécanisme de freinage (BME) et d'au moins un appareil de pilotage (SG), dans lequel pour le freinage statique d'un véhicule, l'élément d'actionnement (BE) est actionné et la au moins une unité de mécanisme de freinage (BME), pilotée en fonction de ce dernier par le biais d'un algorithme de pilotage et d'évaluation (SAR) effectué dans l'appareil de pilotage (SG), est serrée à une vitesse de serrage (AV) prédéfinie,
**caractérisé en ce que**
l'algorithme de pilotage et d'évaluation (SAR) pour la détection de la vitesse de véhicule (V) existant lors de l'actionnement du au moins un élément d'actionnement (BE) et pour la détection d'une vitesse de serrage (AV) pour le serrage de l'unité de mécanisme de freinage (BME) est formé en fonction de la vitesse de véhicule (V) détectée.
